# EUROPÄISCHE PATENTSCHRIFT

(11) **EP 1 419 327 B1**
(45) Veröffentlichungstag und Bekanntmachung des Hinweises auf die Patenterteilung: **14.06.2006**
(21) Anmeldenummer: 02758154.5
(22) Anmeldetag: 20.08.2002
(51) Int. Cl.: F16H 61/22, F16H 59/10

(54) **STEUEREINHEIT FÜR DIE GANG- ODER SCHALTPROGRAMMWAHL EINES AUTOMATISCHEN KRAFTFAHRZEUGGETRIEBES**
CONTROL UNIT GEAR OR SHIFT PROGRAM SELECTION OF AN AUTOMATIC VEHICLE GEARBOX
UNITE DE COMMANDE DESTINEE A LA SELECTION DE PROGRAMMES DE CHANGEMENTS DE VITESSES OU DE RAPPORTS D'UNE BOITE DE VITESSES AUTOMATIQUE DE VEHICULE

(30) Priorität: 22.08.2001 DE 10140164
(43) Veröffentlichungstag der Anmeldung: 19.05.2004
(73) Patentinhaber: ZF Lemförder Metallwaren AG, 49441 Lemförde (DE)
(72) Erfinder: MEYER, Jörg, 49419 Wagenfeld (DE); RAKE, Ludger, 49356 Diepholz (DE)
(86) Internationale Anmeldenummer: PCT/DE2002/003100
(87) Internationale Veröffentlichungsnummer: WO 2003/019048

(56) Entgegenhaltungen:
- US-A- 5 150 593
- US-A- 5 431 266
- US-A- 5 588 330

## Beschreibung

Die Erfindung betrifft eine Steuereinheit für die Gang- oder Schaltprogrammwahl eines automatischen Kraftfahrzeuggetriebes, welches einen Notentriegelungsmechanismus aufweist, durch welchen mittels einer durch den Fahrer betätigbaren Bedienvorrichtung eine Parksperre des Kraftfahrzeuggetriebes freigegeben werden kann, mit einem Gehäuse und einem in mindestens zwei Endstellungen bringbaren Wählhebel.

Automatikgetriebe, für die die gattungsgemäße Bedieneinheit eingesetzt werden kann, weisen üblicherweise mehrere durch den Fahrer manuell vorwählbare Betriebsstufen, die auch als Fahrstufen bezeichnet werden, auf. Eine der Betriebsstufen eines Automatikgetriebes ist hierbei eine so genannte Parkposition. Ist die Parkposition am Automatikgetriebe mittels der Steuereinheit gewählt, so wird durch geeignete Maßnahmen im Getriebe eine Blockierung herbeigeführt, so dass eine Bewegung des Fahrzeuges bei eingelegter Parkposition nicht mehr möglich ist.

Allerdings sind Situationen denkbar, in denen das Fahrzeug trotz eingelegter Parksperre noch bewegt werden soll, beispielsweise für das Abschleppen eines liegengebliebenen Fahrzeuges. Um hier Abhilfe zu schaffen, ist es aus dem Stand der Technik bekannt, Notentriegelungsmechanismen vorzusehen, die eine mechanische Entriegelung der eingelegten Parksperre ermöglichen. Die angesprochene Notentriegelungsmechanismen bestehen dabei üblicherweise aus einer Bedienvorrichtung, beispielsweise in Form eines Zughebels, mit Hilfe derer der Fahrer über einen Seilzug die im Kraftfahrzeuggetriebe eingelegte Parksperre durch eine Zugbewegung an der Bedienvorrichtung freigeben kann. Eine derartige Notentriegelung kann auf diese Weise natürlich auch zusätzlich das Einlegen der Parksperre aufheben. Da bei eingelegter Parksperre ein Fahrzeug nicht mehr durch Wegrollen oder Abschleppen entwendet werden kann, was als wirksame Diebstahlschutzmaßnahme anzusehen ist, sollte eine Notentriegelung der Parksperre nur von autorisierten Personen durchführbar sein.

Die gattungsbildende US 5,588,330 offenbart hierzu bereits eine Steuereinheit für die Gang- oder Schaltprogrammwahl eines automatischen Kraftfahrzeuggetriebes, welche einen Notentriegelungsmcchanismus sufweist, durch welchen mittels einer Bedienvorrichtung eine Parksperre des Kraftfahrzeuggetriebes freigegeben werden kann. Die Bedienvorrichtung ist durch den Fahrer betätigbar und integraler Bestandteil der Steuereinheit, welche ein Gehäuse und einen in mindestens zwei Endstellungen bringbaren Wählhebel aufweist, und weist ferner ein in einer Aufnahme der Steuereinheit mittels einer kodierter Entsperrmechanik gesichertes, lösbares Anschlagelement auf. Das Anschlagelement dient im nicht betätigten Zustand des Notentriegelungsmechanismus als Bewegungsbegrenzung für die Freigabebewegung der Parksperre durch die Bedienvorrichtung. Die Bedienvorrichtung weist in nachteiliger Weise viele Einzelteile auf und ist als ein separates betätigendes Bedienteil ausgebildet, so dass diese Steuereinheit sehr aufwendig und damit kostenintensiv aufbaut.

Aufgabe der vorliegenden Erfindung ist es daher, eine Steuereinheit der gattungsgemäßen Art so weiterzuentwickeln, dass zum einen eine Parksperrenentriegelung bereitgestellt wird, die die heute üblichen Diebstahlschutzmaßnahmen in Kraftfahrzeugen unterstützt und die darüber hinaus in ihrer Bedienbarkeit so gestaltet ist, dass die aus dem Stand der Technik üblichen einzeln vorhandenen Bedienvorrichtungen für den Notentriegelungsmechanismus der Parksperre von automatischen Kraftfahrzeuggetrieben entfallen können.

Diese Aufgabe wird in Zusammenschau mit den gattungsbildenden Merkmalen des Hauptanspruches durch die im kennzeichnenden Teil offenbarte technische Lehre gelöst. Die Bedienvorrichtung des Notentriegelungsmechanismus ist integraler Bestandteil der Steuereinheit und weist ein in einer Aufnahme der Steuereinheit mittels einer kodierten Entsperrmechanik gesichertes, lösbares Anschlagelement auf, welches als Bewegungsbegrenzung für die Freigabebewegung der Parksperre durch die Bedienvorrichtung des Notentriegelungsmechanismus in nicht betätigten Zustand dient.

Erfindungsgemäß erfolgt die Freigabebewegung der Parksperre durch eine Verschiebung des Wählhebels für die Gang- oder Schaltprogrammwahl dergestalt, dass die Notentriegelungsstellung durch Verschiebung des Wählhebels über eine seiner Endstellungen hinaus erfolgt. Dem Fahrer steht somit sowohl die für normale Steuerung des Kraftfahrzeuggetriebes als auch für die Betätigung der Notentriegelung dasselbe Bedienelement in Form des Wählhebels zur Verfügung.

Durch die Vollintegration der Bedienvorrichtung des Notentriegelungsmechanismus werden einerseits Fertigungs- und Montagekosten für eine separate Anordnung der Notentriegelungstnechanismus-Elemente eingespart, darüber hinaus trägt die Integration zu einer Reduzierung notwendiger Bedienelemente für den Fahrer und somit zu einer ergonomisch günstigeren, übersichtlicheren Handhabung des Kraftfahrzeuggetriebes bei. Darüber hinaus ist durch die kodierte Entsperrmechanik des Anschlagelementes den heute üblichen Erfordernissen des Diebstahlschutzes voll umfänglich Rechnung getragen.

Besondere Ausgestaltungen des Erfindungsgegenstandes ergeben sich zusammen mit der technischen Lehre des Hauptanspruches aus den in den Unteransprüchen aufgeführten Merkmalen.

Die Bedienvorrichtung für den Notentriegelungsmechanismus ist dabei durch ein Steuerelement realisiert, welches am Wählhebel angeordnet ist, wobei das Steuerelement mittels eines Verbindungsgliedes an die am Kraftfahrzeuggetriebe angeordnete Parksperre gekoppelt ist.

Das Steuerelement kann hierbei entsprechend einer vorteilhaften Weiterbildung des Erfindungsgedankens als ein Mitnehmer gestaltet sein, der in eine hakenförmige Aussparung am Wählhebel eingreift, sobald dieser in die Freigabeposition für die Parksperre, d. h. in die Notentriegelungsstellung, gebracht wird. Der Mitnehmer kann dabei beispielsweise mittels eines Seilzuges als Verbindungsglied an die Parksperre gekoppelt sein, worauf die Erfindung selbstverständlich nicht beschränkt ist, weil jegliche mechanische Verbindung möglich ist. Die mechanische Realisierung bietet eine preisgünstige Möglichkeit der erfindungsgemäßen Weiterbildung.

Für andere Anwendungsgebiete hat es sich als vorteilhaft erwiesen, das Steuerelement mit einer Hallsensorik am Wählhebel zu versehen, wobei das durch die Hallsensorik aus Hallsensor und zugehörigem Permanentmagnet erzeugte Steuersignal als Überwachungs- und Informationssignal für die Stellung der Parksperre zu verstehen ist.

Die letztgenannte Ausgestaltungsvariante bietet insbesondere den Vorteil, dass die Notentriegelungsstellung des Schalthebels über die bei Shift-by-Wire-Schaltungen bereits vorhandenen Steuerleitungen zusätzlich an das Kraftfahrzeuggetriebe übermittelt werden kann.

Darüber hinaus hat sich eine Weiterbildung der Erfindung als zweckmäßig erwiesen, bei der im Gehäuse der Steuereinheit eine Rastvorrichtung zur Festlegung der Bedienvorrichtung in der Freigabeposition für die Parksperre angeordnet ist. Die Rastvorrichtung stellt sicher, dass beispielsweise beim Abschleppen des Fahrzeuges, bei der die Bedienvorrichtung, vorzugsweise der Wählhebel, in der Notentriegelungsposition gebracht ist, dieser in der gewählten Stellung verbleibt, und somit ein Wiedereinrasten der Parksperre während des Abschleppvorganges ausgeschlossen ist. Die Rastvorrichtung kann dabei vorteilhafterweise aus einem im Gehäuse drehbar gelagerten Klinkenhebel mit einer Ausnehmung und aus einer am Wählhebel fest angeordneten Rastnase bestehen, wobei Ausnehmung und Rastnase in der Parksperren-Frcigabcposition des Wählhebels in Eingriff gebracht sind.

Das Anschlagelement, welches zur Betätigung der Freigabeposition des Wählhebels aus seiner Aufnahme innerhalb der Steuereinheit entfernt werden muss, kann gegen unbefugtes Entfernen durch eine Entsperrmechanik gesichert werden, die durch einen Schlüsseleode zu betätigen ist. Dies bedeutet beispielsweise, dass der für die Benutzung des Fahrzeuges notwendige Zündschlüssel in die am Anschlagelement vorhandene Entsperrmechanik eingeführt werden muss, um das Anschlagelement zu entfernen und daraufhin die Notentriegelung betätigen zu können. Somit ist nur demjenigen eine Betätigung der Notentriegelung möglich, der auch über den Zündschlüssel für die Bedienung des Fahrzeuges verfügt. Entsprechend einer weiteren vorteilhaften Ausgestaltung kann die Entsperrmechanik mit einer elektronischen Kodiervorrichtung versehen sein. Diese kann beispielsweise aus einer alphanumerischen Tastatur bestehen, in der ein mehrstelliger Codebegriff einzugeben ist, um die Entsperrmechanik freizuschalten und das Entfernen des Anschlagelementes zu ermöglichen.

Im Folgenden wird ein Ausfuhrungsbeispiel des Gegenstandes der Erfindung anhand der beigefügten Zeichnungcn näher erläutert. Es zeigen:
- Figur 1: eine perspektivische Außenansicht der erfindungsgemäßen Steuereinheit,
- Figur 2: eine Schnittdarstellung durch die Steuereinheit in einer ersten Schaltendstellung des Wählhebels,
- Figur 3: eine Schnittdarstellung der Steuereinheit mit dem Wählhebel in entgegengesetzter zweiter Endstellung,
- Figur 4: eine Schnittdarstellung durch die Steuereinheit mit Wählhebel in der Freigabeposition für die Parksperre und
- Figur 5: eine Seitenansicht der Steuereinheit mit einem Teilschnitt zur Verdeutlichung der Steuerelemente der Bedienvorrichtung zur Übermittlung der Notentriegelungsposition sowie der Fahrstufenbefehle.

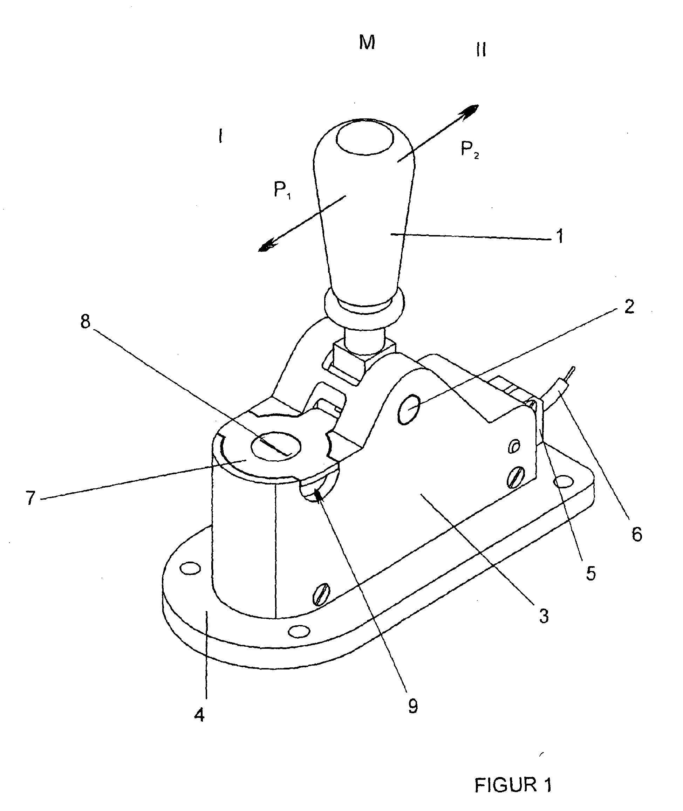

Die in der Figur 1 perspektivisch dargestellte Steuereinheit für die Gang- oder Schaltprogrammwahl eines automatischen Kraftfahrzeuggetriebes weist einen Wählhebel 1 auf, der schwenkbar um eine Drehachse 2 in einem Gehäuse 3 der Steuereinheit angeordnet ist. An der unteren, dem Wählhebel abgewandten Seite des Gehäuses 3 ist dieses mit einem Sockel 4 versehen, welcher zur Befestigung der Steuereinheit an einer nicht näher dargestellten karosserieseitigen Aufnahme eines Kraftfahrzeuges dient. Der Wählhebel 1 kann aufgrund der Lagerung mittels der Drehachse 2 in Längsrichtung des Gehäuses 3 entsprechend den Pfeilen P₁ und P₂ bewegt werden, sodass sich außer der in Figur 1 dargestellten Mittelstellung des Wählhebels 1 zwei seitliche Endstellungen I und II ergeben.

Aus der Figur 1 ist darüber hinaus ersichtlich, dass an einem Längsende der Steuereinheit ein Halteelement 5 für einen Seilzug 6 angeordnet ist. Das Halteelement 5 dient zur Fixierung und Führung des einen freien Endes des Seilzuges 6 am Gehäuse 3. Das nicht dargestellte andere Ende des Seilzuges 6 ist an eine hier nicht näher bezeichnete, da aus dem Stand der Technik bekannte Parksperre am Kraftfahrzeuggetriebe des zugehörigen Kraftfahrzeuges gekoppelt. An dem dem Halteelement 5 abgewandten anderen Ende der Steuereinheit ist ein Anschlagelement 7 zu erkennen, welches in dem in der Figur 1 dargestellten eingebauten Zustand als Bewegungsbegrenzung für die Freigabebewegung der Parksperre durch den Wählhebel 1 dient. Die Funktionen des Anschlagelementes 7 in Verbindung mit einer Bedienvorrichtung für die Betätigung des Notentriegelungsmechanismus für die Parksperre ist in den nachfolgenden Figuren näher erläutert.

Der Figur 1 ist ergänzend zu entnehmen, dass das Anschlagelement 7 an seiner Oberseite einen schlitzförmige Einlass 8 zum Einführen eines Schlüssels aufweist. Durch das Einführen eines entsprechend richtig kodierten Schlüssels kann durch dessen Drehung eine kodierte Entsperrmechanik innerhalb des Anschlagelementes betätigt werden, so dass sich das Anschlagelement 7 aus seiner Aufnahme 9 innerhalb des Gehäuses 3 der Steuereinheit entfernen lässt.

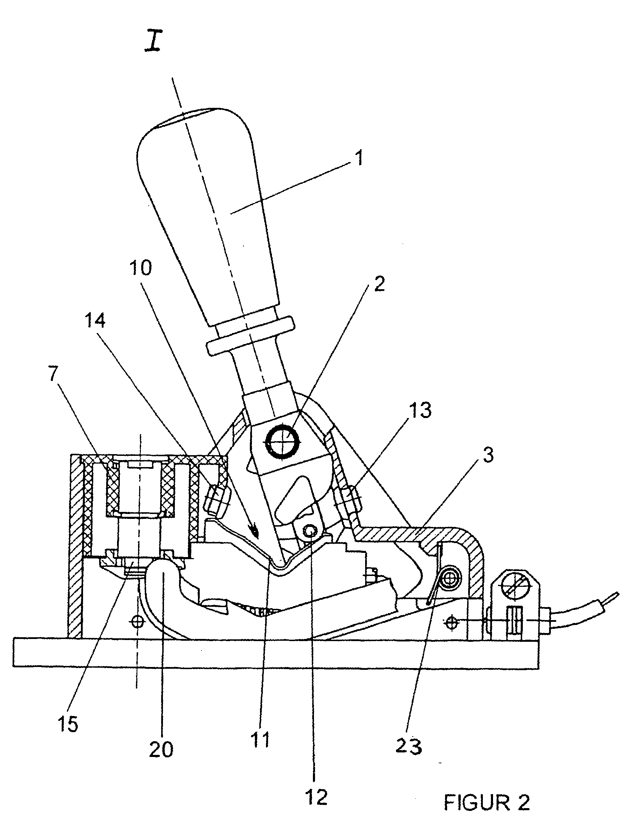

Der Schnittdarstellung der Figur 2 durch das Gehäuse 3 der Steuereinheit ist zu entnehmen, dass der Wählhebel 1 an seinem im Gehäuse 3 aufgenommenen freien Ende eine Kulissenführung 10 aufweist. Die Kulissenführung 10 besteht aus einer Kulissenbahn 11 und einem darauf abrollenden federbelasteten Rad 12. Das Zusammenwirken von Kulissenbahn 11 und Rad 12 bewirkt, dass der Wählhebel 1 eine stabile Mittelstellung M aufweist, wohingegen die außerdem vorhandenen Endstellungen I und II des Wählhebels 1 "instabile" Positionen sind, aus denen der Wählhebel 1 nach Loslassen durch den Bediener automatisch in die stabile Mittelstellung M zurückkehrt. Die Bewegungsbegrenzung für die Endstellung I ist durch einen elastischen Gummipuffer 13 definiert, der in einer zugeordneten Öffnung des Gehäuses 3 aufgenommen ist. Für die definierte Endposition II des Wählhebels 1 ist ebenfalls ein Gummipuffer 14 vorhanden, der an dem aus dem Gehäuse 3 entfernbaren Anschlagelement 7 befestigt ist. Die Entsperrmechanik 15, durch welche das Anschlagelement 7 innerhalb des Gehäuses 3 gesichert ist, solange kein richtig kodierter Schlüssel in den Einlass 8 des Anschlagelementes 7 eingeführt ist, befindet sich an der Unterseite des Anschlagelementes 7.

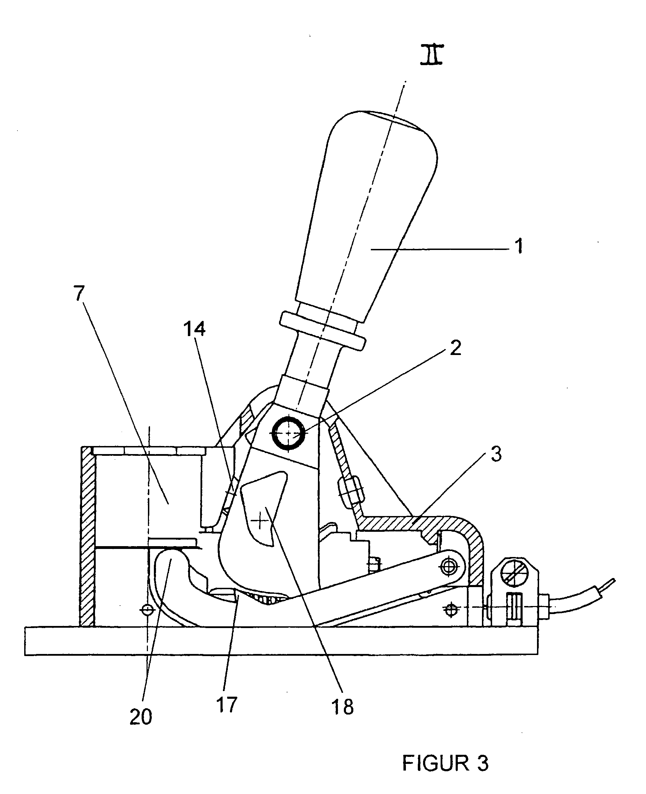

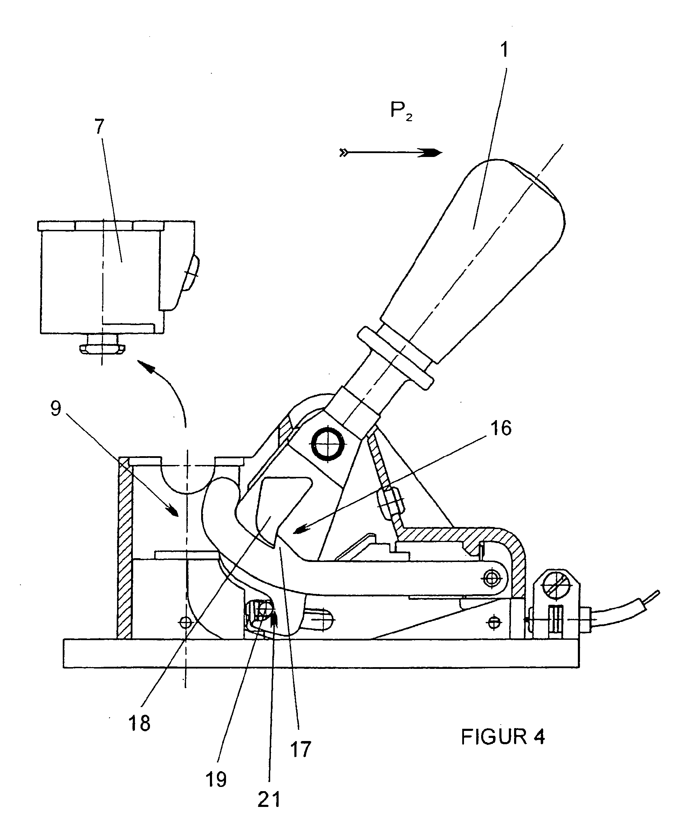

In der Figur 3 ist der Wählhebel 1 in seiner der Position I entgegengesetzten Endlage II dargestellt, wobei der Wählhebel 1 mit einer Anlagefläche am Gummipuffer 14 des Anschlagelementes 7 anliegt. Der Figur 3 ist darüber hinaus zu entnehmen, dass im Gehäuse 3 eine aus einem Klinkenhebel 17 und einer an der Seitenwandung des Wählhebels 1 angeordnete Rastnase 18 bestehende Rastvorrichtung 16 (siehe Figur 4) aufgenommen ist, wobei der Klinkenhebel 17 durch eine in der Figur 2 ersichtliche Feder 23 mit seinem vorderen freien Ende 20 gegen das Anschlagelement 7 gepresst wird.

In der Figur 4 ist die Steuereinheit in der Notentriegelungsposition dargestellt, in welcher der Wählhebel 1 eine gegenüber der Position II weiter geschwenkte Endposition einnimmt. Voraussetzung für die Möglichkeit, den Wählhebel 1 über die Endposition II hinaus zu schwenken ist, ist die Tatsache, dass das Anschlagelement 7, wie in der Figur 4 dargestellt, aus seiner Aufnahme 9 im Gehäuse 3 entfernt wurde. Das Entfernen des Anschlagelementes 7 bewirkt einerseits, dass der am Anschlagelement 7 vorhandene Gummipuffer 14 nicht länger als Begrenzung der Auslenkung in Richtung des Pfeiles P₂ des Wählhebels 1 dient und andererseits, dass durch das Fehlen des Anschlagelementes 7 der Klinkenhebel 17 mit Unterstützung einer als Schenkelfeder 23 ausgeführten Feder nach oben in Richtung des Wählhebels 1 verschwenkt wird und in seiner oberen Endlage mit der am Wählhebel 1 seitlich angebrachten Rastnase 18 verrastet. Die Verrastung bewirkt, dass der Wählhebel 1 in der Notentriegelungsposition verbleibt. Die Freigabebewegung für die Parksperre wird durch einen Mitnehmer 19 bewirkt, welcher sich am Ende des in die Steuereinheit hineinragenden Seilzuges 6 befindet. Korrespondierend zu dem Mitnehmer 19 befindet sich am unteren Ende des Wählhebels 1 eine hakenförmige Aussparung 21, die dazu dient, bei einer Bewegung des Wählhebels 1 über die Endlagenposition II hinaus in die Notentriegelungsposition entsprechend der Richtung des Pfeiles P₂ den Mitnehmer mit dem daran gekoppelten Seilzug 6 zu betätigen, und die mit dem Seilzug 6 am anderen getriebeseitigen Ende gekoppelte Parksperre freizugeben.

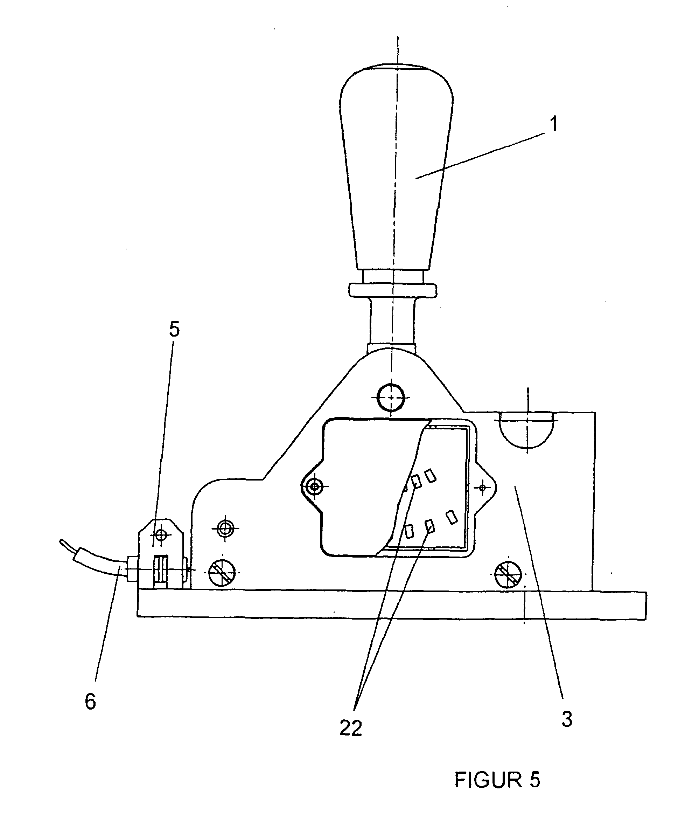

Die Darstellung der Figur 5 gibt eine weitere Ausgestaltungsvariante, bei der das Steuerelement, welches als Teil der Bedienvorrichtung für den Notentriegelungsmechanismus am Wählhebel 1 vorhanden ist, als eine Hallsensorik ausgebildet ist. Hierbei ist im Bereich der Gehäusewandung der Steuereinheit eine Anzahl von Hallsensoren 22 befestigt, welche auf Magnetfelder empfindlich reagieren und entsprechende elektronische Steuersignale generieren können. Die einzelnen Hallsensoren 22 sind jeweils einer entsprechenden Stellung des Wählhebels 1 zugeordnet. Am Wählhebel 1 selbst ist mindestens ein Permanentmagnet in einer solchen Lage befestigt, dass er bei Verschwenkung des Wählhebels 1 einen oder mehrere der Hallsensoren 22 überstreicht bzw. in einzelnen Verschweckungspositionen den jeweils für diese Position zuständigen Hallsensoren gegenüber steht, so dass ein elektronisches Gebersignal gebildet werden kann.

Ein derartiges Gebersignal kann nach Entfernung des Anschlagelementes 7 und einem Verschwenken des Wählhebels 1 über die Endposition II hinaus in die Notentriegelungsposition auch von den entsprechend für diese Position zuständigen Hallsensoren generiert werden. Über eine Steuerelektronik und eine entsprechende Verkabelung kann der generierte Befehl, die Parksperre des Notentriegelungsmechanismus im Kraftfahrzeuggetriebe zu lösen, elektronisch übermittelt werden, so dass auf die in den vorangegangenen Figuren geschilderte Übermittlung des Steuerbefehls mittels eines Seilzuges 6 verzichtet werden kann.

Natürlich ist es denkbar, die Steuerbefehle für die Gangsturen des automatischen Kraftfahrzeuggetriebes mittels einer Hallsensorik zu generieren, was besonders unter Verschleißgesichtspunkten vorteilhaft ist, die Übermittlung des Steuerbefehls für die Freigabe der Parksperre wird jedoch wie bereits in den Figuren 1 bis 4 dargestellt, weiterhin per Seilzug 6 mechanisch übennittel, da auch eine Freigabe bei nicht oder unzureichend vorhandener Bordspannung gewährleistet werden muss.

### Bezugszeichenliste

- 1: Wählhebel
- 2: Drehachse
- 3: Gehäuse
- 4: Sockel
- 5: Halteelement
- 6: Seilzug
- 7: Anschlagelement
- 8: Einlass
- 9: Aufnahme
- 10: Kulissenführung
- 11: Kulissenbahn
- 12: Rad
- 13: Gummipuffer
- 14: Gummipuffer
- 15: Entsperrmechanik
- 16: Rastvorrichtung
- 17: Klinkenhebel
- 18: Rastnase
- 19: Mitnehmer
- 20: freies Ende
- 21: Aussparung
- 22: Hallsensor
- 23: Schenkelfeder

## Patentansprüche

1. Steuereinheit für die Gang- oder Schaltprogrammwahl eines automatischen Kraftfahrzeuggetriebes, welche einen Notentriegelungsmechanismus aufweist, durch welchen mittels einer durch den Fahrer betätigbaren Bedienvorrichtung eine Parksperre des Kraftfahrzeuggetriebes freigegeben werden kann, mit einem Gehäuse (3) und einem in mindestens zwei Endstellungen bringbaren Wählhebel (1),
wobei die Bedienvorrichtung des Notentriegelungsmechanismus integraler Bestandteil der Steuereinheit ist, und die Bedienvorrichtung ein in einer Aufnahme (9) der Steuereinheit mittels einer kodierten Entsperrmechanik (15) gesichertes, lösbares Anschlagelement (7) aufweist, welches in nicht betätigtem Zustand des Notentriegelungsmechanismus als Bewegungsbegrenzung für die Freigabebewegung der Parksperre durch die Bedienvorrichtung dient,
**dadurch gekennzeichnet, dass,**
die Freigabebewegung der Parksperre durch eine Verschiebung des Wählhebels (I) über eine seiner Endstellungen hinaus erfolgt.

2. Steuereinheit nach Anspruch 1,
**dadurch gekennzeichnet, dass**
die Bedienvorrichtung durch ein Steuerelement (19, 21, 22) am Wählhebel (1) realisiert ist, wobei das Steuerelement mittels eines Verbindungsgliedes (6) an die am Kraftfahrzeuggetriebe angeordnete Parksperre gekoppelt ist.

3. Steuereinheit nach Anspruch 2,
**dadurch gekennzeichnet, dass**
das Steuerelement als ein Mitnehmer (19) gestaltet ist, der in eine hakenförmige Aussparung (21) am Wählhebel (1) eingreift, sobald dieser in Freigabeposition für die Parksperre gebracht ist.

4. Steuereinheit nach Anspruch 2,
**dadurch gekennzeichnet, dass**
das Steuerelement eine Hallsensorik (22) aufweist, die ein elektrisches Anzeigesignal für die Stellung der Parksperre generieren kann.

5. Steuereinheit nach einem der Ansprüche 1 bis 4,
**dadurch gekennzeichnet, dass**
im Gehäuse (3) eine Rastvorrichtung (16) zur Festlegung der Bedienvorrichtung für die Parksperre in deren Freigabeposition angeordnet ist.

6. Steuereinheit nach Anspruch 5,
**dadurch gekennzeichnet, dass**
die Rastvorrichtung (16) einen im Gehäuse drehbar gelagerten Klinkenhebel (17) mit einer Ausnehmung und eine am Wählhebel (1) feste Rastnase (18) aufweist, wobei Ausnehmung und Rastnase in der Freigabeposition des Wählhebels für die Parksperre miteinander in Eingriff sind.

7. Steuereinheit nach einem der Ansprüche 1 bis 6,
**dadurch gekennzeichnet, dass**
die Entsperrmechanik (15) des Anschlagelementes mittels eines Schlüsselcodes gesichert ist.

8. Steuereinheit nach einem der Ansprüche 1 bis 6,
**dadurch gekennzeichnet, dass**
die Entspemnechanik (15) des Anschlagelementes mittels einer elektronischen Codiervorrichtung gesichert ist.

## Claims

1. Control unit for the gear or shift program selection of an automatic motor vehicle transmission which comprises an emergency unlocking mechanism through which, by means of an operating device which can be actuated by the driver, a parking lock of the motor vehicle transmission can be released, with a housing (3) and a selector lever (1) which can be brought into at least two end positions,
wherein the operating device of the emergency unlocking mechanism is an integral component of the control unit, and the operating device comprises a releasable stop element (7) which is secured in a receptacle (9) of the control unit by means of an encoded unblocking mechanism (15) and which serves as a motion limit for the release motion of the parking lock through the operating device when the emergency unlocking mechanism is in the non-actuated state,
**characterised in that**
the release motion of the parking lock takes place through a displacement of the selector lever (1) beyond one of its end positions.

2. Control unit according to Claim 1,
**characterised in that**
the operating device is implemented by means of a control element (19, 21, 22) at the selector lever (1), wherein the control element is coupled by means of a connecting member (6) to the parking lock disposed at the motor vehicle transmission.

3. Control unit according to Claim 2,
**characterised in that**
the control element is configured as a driver (19) which engages in a hook-shaped recess (21) at the selector lever (1) as soon as this is brought into the release position for the parking lock.

4. Control unit according to Claim 2,
**characterised in that**
the control element comprises a Hall sensor system (22) which can generate an electrical indicator signal for the position of the parking lock.

5. Control unit according to any one of Claims 1 to 4,
**characterised in that**
a detent device (16) for fixing the operating device for the parking lock in the release position thereof is disposed in the housing (3).

6. Control unit according to Claim 5,
**characterised in that**
the detent device (16) comprises a ratchet lever (17), which is rotatably mounted in the housing and has a recess, and a detent lug (18) disposed in a fixed manner at the selector lever (1), wherein the recess and the detent lug are engaged when the selector lever is in the release position for the parking lock.

7. Control unit according to any one of Claims 1 to 6,
**characterised in that**
the unblocking mechanism (15) of the stop element is secured by means of a key code.

8. Control unit according to any one of Claims 1 to 6,
**characterised in that**
the unblocking mechanism (15) of the stop element is secured by means of an electronic encoding device.

## Revendications

1. Unité de commande pour la sélection du programme du changement de rapport ou de vitesse d'une transmission automatique de véhicule automobile qui présente un mécanisme de déverrouillage d'urgence, par lequel le frein de parking de la transmission automatique du véhicule automobile peut être désenclenché par un dispositif de manoeuvre pouvant être actionné par le conducteur, comportant un boîtier (3) et un levier de sélection (1) pouvant être mis dans au moins deux positions de fin de course,
le dispositif de manoeuvre du mécanisme de déverrouillage d'urgence faisant partie intégrante de l'unité de commande, et le dispositif de manoeuvre présentant dans un logement (9) de l'unité de commande un élément de butée (7) amovible protégé par un mécanisme de déblocage codé (15), lequel élément de butée sert de limiteur de mouvement pour le mouvement de désenclenchement du frein de parking par le dispositif de manoeuvre lorsque le mécanisme de déverrouillage d'urgence n'est pas actionné,
**caractérisée en ce que**
le mouvement de désenclenchement du frein de parking se fait par un déplacement du levier de sélection (1) au-delà d'une de ses positions de fin de course.

2. Unité de commande selon la revendication 1,
**caractérisée en ce que**
le dispositif de manoeuvre est réalisé par un élément de commande (19, 21, 22) sur le levier de sélection (1), l'élément de commande étant couplé au moyen d'un organe de liaison (6) au frein de parking disposé sur la transmission du véhicule automobile.

3. Unité de commande selon la revendication 2,
**caractérisée en ce que**
l'élément de commande est conçu sous la forme d'un entraîneur (19) qui s'engage dans un évidement en forme de crochet (21) prévu sur le levier de sélection (1) dès que ce dernier est mis dans la position de désenclenchement du frein de parking.

4. Unité de commande selon la revendication 2,
**caractérisée en ce que**
l'élément de commande présente un système de détection à effet Hall (22) qui peut générer un signal électrique indicateur de la position du frein de parking.

5. Unité de commande selon une des revendications 1 à 4,
**caractérisée en ce que**
un dispositif d'encliquetage (16) pour l'immobilisation du dispositif de manoeuvre dans la position désenclenchée du frein de parking est disposé dans le boîtier (3).

6. Unité de commande selon la revendication 5
**caractérisée en ce que**
le dispositif d'encliquetage (16) présente un levier à cliquet (17) monté de manière pivotante dans le boîtier et comportant un évidement, et un taquet d'encliquetage (18) disposé fixement sur le levier de sélection (1), l'évidement et le taquet d'encliquetage venant en prise l'un avec l'autre lorsque le levier de sélection est en position de désenclenchement du frein de parking.

7. Unité de commande selon une des revendications 1 à 6,
**caractérisée en ce que**
le mécanisme de déblocage (15) de l'élément de butée est protégé au moyen d'un code.

8. Unité de commande selon une des revendications 1 à 6,
**caractérisée en ce que**
le mécanisme de déblocage (15) de l'élément de butée est protégé par un dispositif de codage électronique.
